Europäisches Patentamt

European Patent Office

Office européen des brevets

(11) Publication number: **0 129 279**
**A1**

# (12) EUROPEAN PATENT APPLICATION

(21) Application number: **84200806.2**

(22) Date of filing: **07.06.84**

(51) Int. Cl.³: **E 02 B 15/04**

(30) Priority: **08.06.83 NL 8302042**

(43) Date of publication of application:
**27.12.84 Bulletin 84/52**

(84) Designated Contracting States:
**BE DE FR GB IT NL SE**

(71) Applicant: **BAGGER- EN AANNEMINGSMAATSCHAPPIJ
VAN DER KAMP B.V.
Beukenallee 1 P.O. Box 146
NL-8000 AC Zwolle(NL)**

(72) Inventor: **Van der Kamp, Evert Hendrik
Stinsweg 25
NL-8042 AZ Zwolle(NL)**

(74) Representative: **van der Beek, George Frans  et al,
Nederlandsch Octrooibureau Johan de Wittlaan 15 P.O.
Box 29720
NL-2502 LS 's-Gravenhage(NL)**

(54) Apparatus for removing oil pollutants on water

㉗ Vessel 1 specially equipped for removing concentrated oil-pollutants from the sea, which float at the surface and just below it in the form of tacky large conglomerates or strings of dozens of kilograms, fitted with a controllable self-floating 9 sweepingarm 6 with collecting container 7, the arm having a fully smooth, closed and rigid screen 32 fitted to its frontside and extending deep below the watersurface, and having over its entire length at least one water transport pipe 38 for considerably pressurised water, with a number of adjustable water jet nozzles 36, 37 fitted spaced to said pipe to cut the conglomerates into pieces, inject air into them to improve their floatability and sweeping them along the screen to the collecting container 7, cleaning meanwhile the screen as well. Additional water jets are fitted to the collecting container 7 and the suction pipe 18 of the pump, adapted to be fed at times with heated water if required. The vessel is preferably a self propelled common suction-hopper-dredger fitted with suction pump.

EP 0 129 279 A1

./...

Fig-1

Apparatus for removing oil pollutants on water.

The invention relates to an apparatus for removing oil pollutants on water, particularly for concentrated pollutants on the sea, which consists of a vessel having at least one substantially rigid sweeping arm provided with floats and with means for sweeping and guiding the pollutant, and having means, such as lifting cranes, winches and cables, for controlling and guiding the sweeping arm between a sweeping position of maximum extension and a sweeping position of minimum extension and at least one position of rest in which it is hoisted alongside and/or on board, and further having a self-floating collecting container disposed at the end of the sweeping arm near the vessel and provided with a grid, a skimmer and a flexible suction pipe connected between the bottom part of the collecting container and a suction pump, the latter pumping the swept mixture of oil and water to separation tanks in the ship.

Arrangements of this kind are known from European Patent Application 0.048.054 and Dutch Patent Application 77.00815. These two publications describe arrangements having single or double rows of screens or partitions which are disposed over the length of the sweeping arm and are intended for bringing about a flow of the pollutant floating on the water in the direction of the collecting container alongside the vessel. Some of these partitions are adjustable, while others, in particular the actual sweeping partitions, are made freely movable in the vertical direction, being guided in channels in the sweeping arm structure. Each partition is self-floating and it is intended that they should be able to move up and down with the swell of the sea, so that, despite the swell, all the pollutant can be effectively held back and guided to the collecting container. Inside the collecting container is disposed a generally vertical grid making it possible to retain coarse foreign matter, such as for example wood and rope, which would damage the screw pumps usually fitted. Known installations are furthermore all provided with a skimmer which follows the swell in such a manner that on the one hand only the top layer can overflow from the surface into the collecting container, so that the largest possible amount of oil pollutant and the smallest possible amount of water will be taken up by the suction pump, while on the other hand the collecting container cannot become empty and allow the pump to draw in air. Water and oil must in fact be separated in the tanks on the ship, so that it is advantageous for as little water as possible to be pumped in.

In practice it has been found that the sweeping arm installations described work effectively and reliably as long as the oil pollutants are of low viscosity and have, so to speak, still some "lubricating" properties, so that the freely floating panels or partitions are not hampered in their freedom of movement enabling them to follow the swell. If the polluting oil is of high viscosity or starts to become tacky, the installations no longer appear to work in an reliable manner. Known installations are however entirely unusable when the pollutants are highly concentrated, usually through having stayed on the water for rather a long time, so that the lighter fractions have had an opportunity to evaporate. This phenomenon is obviously highly dependent on the nature and type of the original polluting oil. At high seawater temperatures evaporation takes place more quickly, and stormy weather with breaking waves may greatly assist concentration through the formation of ar emulsion of seawater and oil. Through the evaporation of the light fractions from the polluting oil and the possible inclusion of water, it frequently occurs that the relative density of the pollutants becomes approximately equal to that of water, so that there is no longer any clearly defined pollutant layer on the surface of the water, the pollutants being suspended slightly below the surface or even at a depth of up to one metre below the surface of the water. The pollutants are then usually found to consist of large and very tacky conglomerations up to a weight of some tens of kilograms, forming long strings of up to several metres in length. In practice it has now been found that, as was to be expected, existing sweeping installations, as described above, were found to be unable to deal with this kind of pollutant. Within a short time the whole system became clogged and stopped up with the sticky mass, so that further working was impossible and in addition considerable work was entailed for cleaning and reconditioning the sweeping arms with all their moving parts.

Unfortunately, it frequently occurs, for example as the consequence of weather conditions or because the ships equipped for sweeping are not immediately available or because the pollutants are situated at a relatively great distance from the sweeping ships, that the oil pollutants have had the opportunity and the time to form the previously mentioned tacky strings and lumps. The invention now seeks to provide a sweeping arm apparatus which is especially equipped to be able to remove such concentrated tacky pollutants on the sea in an effective manner and without interruptions to operation. The apparatus should be suitable for sweeping pollutants which are still of low viscosity, while it would be advantageous for the new apparatus to be able to be installed on existing ships. In particular, such ships could be the type of ocean-going hopper suction dredgers which are already equipped with a suction pump for a sand-clay-water mixture and with large hoppers or tanks.

According to the invention the apparatus described above is now characterised in that the sweeping means of the sweeping arm consist of a substantially vertical, rigid, smooth screen fastened at the front (referring to the direction of travel) against the sweeping arm and extending to a considerable depth below the mean water level, in that the sweeping arm carries over its entire length a pressure water pipe connected to a source of considerable pressure, and in that a number of jet nozzles are disposed in a spaced relationship near the top edge, some distance in front of the sweeping screen, and are directed substantially at a slight angle towards the screen and obliquely downwards and obliquely towards the collecting container, and further in that in the collecting container at least one jet nozzle is directed onto the grid and at least one jet nozzle is directed, as a jet lance lower in the container, substantially horizontally towards and into the suction connection of the flexible suction pipe.

The provision of a smooth, rigid screen gives the advantage that there are no moving parts which would quickly become ineffective because of the tacky pollutants.

Through the action of the jet nozzles fitted, jets of water are directed with great force against and along the screen, with a substantially fourfold purpose. The sequence indicated below does not stipulate the order of importance of the different functions, because this is dependent on the local situation and other factors. The tacky lumps and

- 6 -

strings thrown up by the sweeping screen. are broken up by the hard water jets into smaller conglomerates. At the same time the powerful water jets bring finely divided air into the water and also into the pollutants, while in addition some water is brought into the lumps.   In addition to division into smaller pieces, this provides the great advantage that the relative density of the lumps is reduced by the air introduced into them, so that they come to float closer to the surface and have less tendency to pass under the screen and escape the sweeping operation. This action can also be assisted to some extent by disposing the sweeping screen at a slight angle in relation to the vertical, as specified in a preferred embodiment, so that a slight upwardly directed movement component is produced.  In addition, the hard water jets detach from the screen the pollutants which are practically always adhering to the latter, and propel them, because of the outflow direction selected, to the collecting container.   For this purpose, according to the invention the jet nozzles may, depending on the situation, produce one or more concentrated jets, or else flat, screen-shaped jets. The jet nozzles can be interchangeably installed, or they may all always be installed but be adapted to be individually remotely operated and adjusted.

The same applies to the jet nozzle or nozzles which is or are directed towards the preferably horizontally disposed grid for the purpose of driving the

tacky lumps through it. The same similarly applies to the collecting container, one or more jet nozzles which serve as a jet lance being directed towards and into the suction pipe. All the nozzles mentioned may be adapted to be individually operated. In a special embodiment the suction pipe itself, particu- arly if it is long, may be provided with additional jet nozzles which are directed in the direction of flow, and which contribute towards keeping the suction pipe clean and propelling the water and the lumps forwards to the suction opening of the pump. In another preferred embodiment it may be advantage- ous for the last-mentioned jet nozzles to be fed with hot water periodically during operation and in particular on termination of operation. In this way the suction pipe and the internal parts of the pump and blower can be periodically cleaned. In view of the fact that in ocean-going hopper suction dredgers there are installed powers of thousands of kilowatts for propulsion and for driving the pumps, the cooling water and the exhaust gases of the engines contain sufficient heat to supply hot water for the jet nozzles mentioned. No extra fuel is required for the purpose, although exhaust gas heat exchangers and, preferably, a hot water accumulation tank would have to be installed.

The most important disadvantage of known installations is avoided by the provision of the jet nozzles and the smooth sweeping screen, so that the effect achieved consists in that for the first time a sweeping installation, which can be used effectively and for a long time, is provided for concentrated pollutants on the sea, as tests have already proved.

Other features of the invention will emerge from the following description of the drawings and from the claims. Particular mention should also be made of one aspect: the cleaning of the entire installation periodically or on completion of operation to remove concentrated pollutants gave rise to great difficulties in existing installations, because the ship itself because thereby considerably soiled. A preferred embodiment is now characterised in that the sweeping arm together with the collecting container is controlled in such a manner that it can first be guided and hoisted outboard above the waterline and to deck height, and can there be cleaned by spraying. In addition, the sweeping apparatus is so constructed that the sweeping arm together with the collecting container is brought on board only by further lifting in order to be made fast on or above the deck. By providing the collecting container with insulated wheels, preferably equipped with pneumatic tyres, metallic contact is avoided and the continuous upward and downward movement resulting from the swell and the rolling of the ship will avoid continuous scraping along the ship's plates and consequent damage to the latter. Not only do the pneumatic tyres damp the notorious continual bumping of the sweeping arm and collecting container against the bulwarks, but they also prevent sparking. When the pollutants have a low flash point, this last-mentioned feature can be of particularly great importance for safe operation.

The invention will be explained in greater detail, as an example, with the aid of the following description of the drawings of a preferred embodiment.

Figure 1 is a partial side view of a hopper suction dredger provided with the sweeping apparatus according to the invention.

Figure 2 is a side view of Figure 1.

Figure 3 shows on a smaller scale and in diagrammatical form the direction of navigation during sweeping operation.

Figure 4 is a cross-section through the sweeping arm according to the invention.

Figures 5a and 5b show in diagrammatical form constructional details making it possible for the sweeping arm to be brought alongside the ship and fastened above deck.

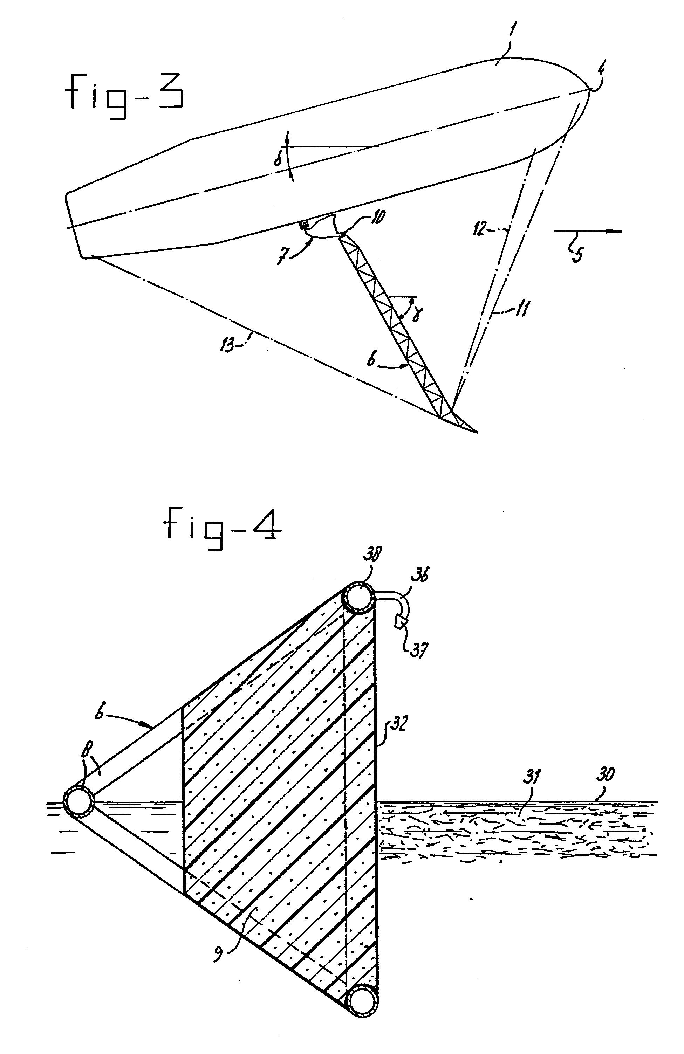

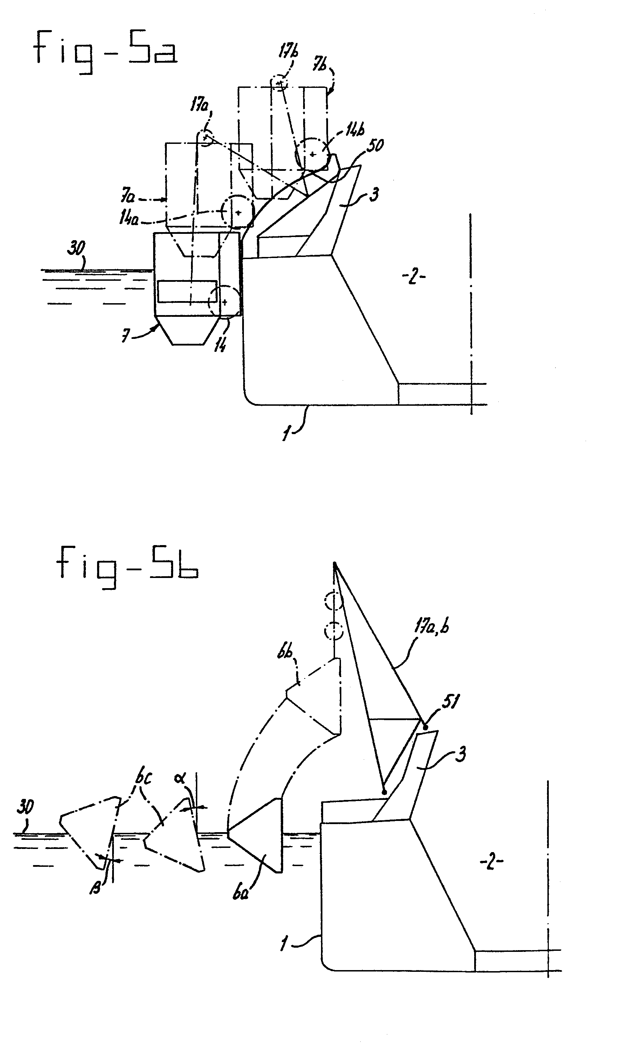

In the drawings, 1 designates a known self-propelling hopper suction dredger, which has a large hopper or storage space 2 (Figures 5a and 5b, which, in normal operation of the vessel as a hopper suction dredger, serves to receive and separate the slurry of sand and clay taken from the bottom of the fairway. When, however, the hopper suction dredger is used for sweeping oil pollutants, particularly concentrated pollutants, the hopper is filled with the incoming mixture of water and pollutants, and in the spacious hopper these have the opportunity to separate from one another. In order to give the hopper a sufficiently large capacity it is often necessary for the latter to be extended above deck height on the vessel, as indicated diagrammatically by the wall 3 surrounding the hopper. The prow of the vessel is designated 4 in order to indicate a normal direction of navigation of the ship. In Figure 3 the direction of navigation is indicated by the arrow 5, from which it can also be seen that with maximum extension of the sweeping arm 6, as the result of the resistance offered by the sweeping arm in the water, the vessel moves with a drift angle $\Delta$ of about 15o&, while the effective sweeping angle $\gamma$ then amounts to about 60o&. In the different Figures the sweeping arm as a whole is designated 6 and the collecting container 7, the latter receiving the swept pollutants mixed with water, which are then discharged via the grid 40 by means of the suction pipe 18 to the standard suction pump (not shown) of the ship. In view of the fact that it is a hopper suction dredger, the vessel is normally equipped with a centrifugal "sand pump". Because of the invention and of the means applied by it, it will be possible in practically all cases for even concentrated pollutants to be handled with the standard centrifugal sand pump. This in itself constitutes a great advantage, because a sand pump is generally not sensitive to coarse pollutants, but above all because the hopper suction dredger does not have to be converted for sweeping operation. By far the greatest part of the working life of the vessel will in fact consist of normal hopper suction dredging, while sweeping operations will have to be carried out only every now and again and for short periods of time. Nevertheless, the ship can at any moment be called on for sweeping work, and it is then a great advantage if the vessel can be made available in the shortest possible time and with the least possible modification. This last-mentioned point forms one of the important aims achieved by the apparatus according to the invention.

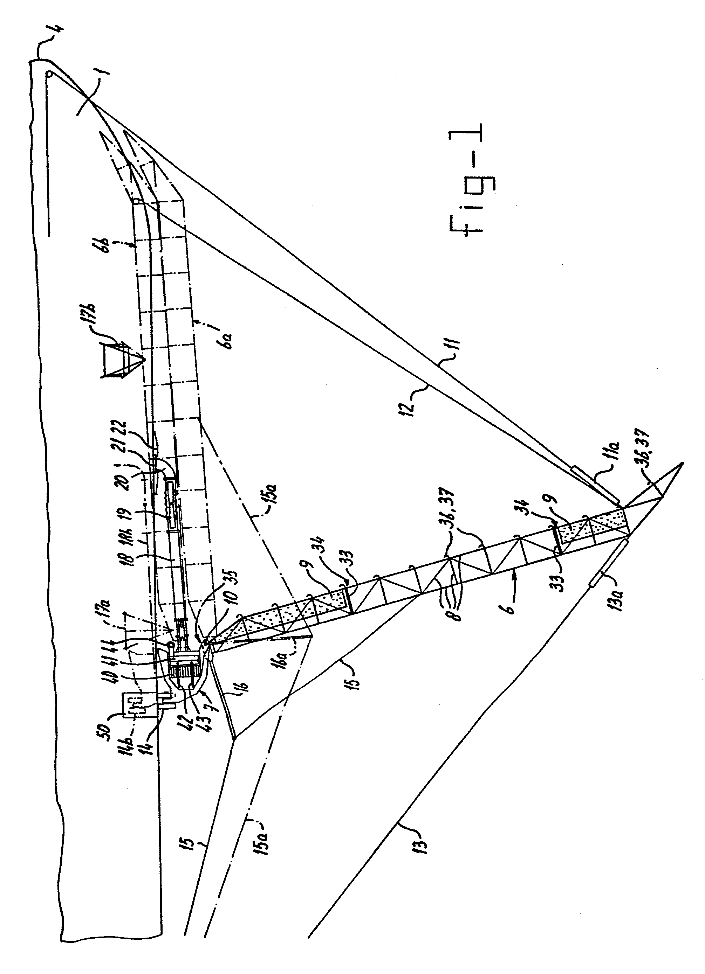

The sweeping arm 6 is constructed in the conventional manner in the form of a steel structure 8, which preferably has a triangular section and, as far as possible, is composed of round sectional members, such as pipes. The latter form fewer dead corners and are therefore easier to clean for the removal of adhering pollutants. The sweeping arm 6 together with the collecting container 7 is self-buoyant, and for this purpose the sweeping arm is equipped with floats 9 at suitable points, these floats being so shaped that they hold the sweeping arm in a stable position. The collecting container is likewise of partly hollow construction, so that it too will be self-buoyant. The sweeping arm 9 is joined to the collecting container 7 by means of a heavy diagrammatically indicated universal joint 10. In order to be able to follow the swell and to leave the vessel free to make rolling movements, the universal joint 10 is installed in such a manner that a turning movement about a vertical axis is possible, as well as a turning movement about a horizontal axis at right angles to the longitudinal direction of the sweeping arm 6. The sweeping arm 6 thus usually assumes a a position in which the front or sweeping side with the sweeping screen 32 is vertical. In certain circumstances it may, however, be advantageous for the sweeping screen 32 to be slightly inclined relative to the vertical, as indicated by the angles $\alpha$ and $\beta$ in Figure 5b. In a preferred embodiment, the fixing of the joint 10 to the collecting container can be slightly adjusted, preferably remotely and during operation, for example with the aid of hydraulic cylinders. In Figures 1 and 3 the cables installed for the adjustment of the sweeping angle are shown in rather simplified form. With the aid of a diagrammatically indicated winch, the cable 11 adjusts the sweeping angle and is joined to the sweeping arm by means of a stretcher 11a in order to compensate for shocks. In order to hold the arm in the desired position when the ship is moving slowly or is motionless or even moving astern, a cable 13, likewise provided with a stretcher, is taken back to the stern.

In order to prevent accidents and damage in the event of the fracture of the sweeping angle adjustment cable 11, a safety line 12 is provided.  Through the tension in the cables 11 and 13, the sweeping arm 6, together with the collecting container 7, is pressed against the ship's hull on the starboard side.  Since a relative movement always occurs at sea between the collecting container and the vessel, according to the invention a set of wheels 14, preferably equipped with rubber pneumatic tyres, is mounted for rotation on the collecting container to permit movement in the upward and downward directions over the ship's skin. Wear on the customary fenders is thereby prevented, while in addition, because of the resiliency of the rubber pneumatic tyres, the shocks between the collecting container 7 and the ship are limited and sparks are prevented.

Between the collecting container 7 and the ship's skin an elastic flap (not shown) can be provided in order to prevent pollutants from leaking through the gap between the container and the ship's skin.

In order to be able to bring the sweeping arm alongside the ship and to return it to the sweeping position, auxiliary cables 15 are provided, which are guided via a yoke 16.  The latter is removably fastened to the sweeping arm at an angle of about $90^{o\&}$. When the sweeping arm has been brought alongside into the position 6a shown in broken lines, the yoke and the operating cables 15 are then respectively in the positions 16a and 15a, as shown in Figure 1.

In order to lift the entire apparatus, comprising the sweeping arm 6 and the collecting container 7, two derricks 17a and 17b are disposed on board the ship, these derricks merely being indicated diagrammatically in the drawings, while in the majority of embodiments it will be advantageous for the derricks to be able to be peaked with the aid of operating devices 51, particularly in order to hold the sweeping arm 6 outboard in the position 6a (Figure 5b) or inboard above the deck in the position 6b.

Between the collecting container 7 and the suction pump (not shown) in the interior of the ship is provided the suction pipe 18, which in known manner is equipped at 19 with a controlled articulation. By means of a bend piece 20 the suction pipe is connected in known manner to an opening in the side wall of the ship, the suction pump being connected to this opening. In order to enable the suction pipe 18, 19, 20 to be easily removed, for example for repair purposes or on mooring, the bend piece 20 is guided in known manner in slotted plates by means of a sliding member 21. The slotted plates 22 are fastened to the ship's plating, while the sliding member 21 can be raised vertically out of the slotted plates. As shown by the dash-dot centre line 18b in Figure 1, the suction pipe can then be brought inboard and above the deck when the entire sweeping apparatus 6, 7 is also brought inboard.

The sweeping arm 6 and the collecting container 7 are situated, as illustrated in the drawings, particularly in Figure 4, at a mean height relative to the mean water level 30 through the action of their floats 9. In view of the fact that the invention relates more particularly to concentrated pollutants which extend to about 1 metre under the mean water surface 30, and which are diagrammatically indicated at 31, the sweeping screen 32 should have a large vertical area, while it is not necessary for the mean water surface 30 to extend exactly through the centre of the cross-section of the sweeping arm, but the section of the sweeping arm may also be asymmetrical or may extend further below the water surface than above it. In order to allow the long sweeping arm 6 to follow the swell more effectively, it may be provided, for example at two points, at 33 with articulations with horizontal axes at right angles to the longitudinal direction of the arm. The positioning of the floats 9 takes into account the possible provision of the articulations 33. Through the provision of a plurality of articulations 33, the sweeping arm can in addition easily be lengthened with intermediate pieces, or be shortened by the removal of intermediate pieces. At every articulation 33 the rigid sweeping arm 32 should be of closed construction so that, as it follows the swell, it will not temporarily open up and thus

allow pollutants to pass through.    For this purpose the sweeping screens should each overlap at the position 34, or elastic members, for example of rubber, may be incorporated.    The same obviously also applies to the transition from the sweeping screen 32 to the inlet of the collecting container 7, where a yielding member, for example made of rubber or plastics material, is disposed around the universal joint 10 in order to provide a seamless, yielding connection.    A divided sweeping arm is in addition more easily transported by road, if need be.

An essential part of the invention consists of the jet nozzles 37 which are disposed in a spaced relationship along the entire length of the sweeping arm 6, and which with the aid of bend pieces 36 are detachably connected to a pressure water supply pipe 38, which can for example form the top longitudinal member of the sweeping arm.  This water supply pipe 38 will obviously have to be provided with resilient connections at the articulations 33.    The jet nozzles 37 are exchangeable or adapted to be connected or disconnected by remote control, and are able to produce massive or screen-like jets, which on the one hand are directed obliquely along and against the sweeping screen 32 in order to wash away any adhering pollutants, and on the other hand are directed at a certain angle obliquely downwards and obliquely in the direction of the collecting container 7 for the purpose of imparting to the pollutants an additional impulse for their displacement along the sweeping screen in the direction of the collecting container. A substantial proportion of the action of the water jets consists in dividing into smaller conglomerates the often large lumps or strings of concentrated pollutants. For this purpose, not only is a certain amount of water injected into the pollutants, but because of the force of the water jet, air will also be injected into them, so that the pollutants will be given the very desirable greater buoyancy which is needed for the sweeping process to be really effective. The risk that the pollutants will flow under the sweeping screen 32, together with the displaced water, is thereby considerably reduced and, as tests have shown, practically completely eliminated. The jet nozzles 36, 37 are merely indicated diagrammatically in Figures 1 and 4, and it will be clear that, depending on the consistency and appearance of the pollutants, different types of jet nozzles can be used and will preferably be adapted to be individually operated from the ship. For this purpose the supply pipe 38 may also be in the form of a bundle of separately controllable pipes, each provided with a different kind of optionally differently directed nozzles. In view of the fact that the amourt of pollutant swept up increases along the sweeping arm in the direction of the collecting container 7, it is desirable to use jet nozzles the number or size of which increases in the direction of the collecting container.

Jet nozzles are also provided in the collecting container 7, but for the sake of simplicity these are not shown in the drawings. In the same way as described in connection with the sweeping arm, there is at least one jet nozzle, which acts substantially vertically downwards on the suction grid 40 disposed horizontally in the collecting container. Under the grid there is situated in the collecting container at least one jet lance which is directed approximately horizontally and which is oriented towards the inlet of the suction tube 18. Jet nozzles directed similarly to the flow through the tube may also be disposec on the suction tube 18, all these nozzles being intended to dislodge any pollutants adhering to the walls so that they will once again be entrained towards the pump by the stream of water and pollutants. It is also not shown in the drawings that it may be of advantage for the jet nozzles, particularly those in the collecting container and those in the suction pipe 18, as well as any disposed in the bend piece 20, to be connected to a source of hot water, for the purpose of cleaning the suction pipe 18 and the pump thoroughly, to free them of concentrated oil pollutants, both periodically and at the end of the sweeping operation. This is also of importance for the reason that when the ship is to be used in the normal way as a hopper suction dredger, the suction pipe 18 is reconnected to the standard suction pipe in the ship.    In this respect it may be pointed out that all supplementary equipment necessary for sweeping pollutants is so designed that a standard hopper suction dredger can be rapidly and in a simple manner converted into a sweeping ship, and back into a hopper suction dredger again, while it would be possible for a number of components to be left on board if desired.

With regard to the collecting container 7 it may be added that the grid 40 is disposed horizontally in order to make it easier for the concentrated tacky pollutants to pass or to be propelled through it, in contrast to all known appliances having grids disposed vertically.    In order to draw in the least possible surplus water, which will subsequently have to be separated and will thus require extra power and reduce capacity, a skimmer 41 is disposed in known manner in the inlet of the collecting container, this skimmer being pivotally mounted, with the aid of two arms 42, about pivot points 43 in the rear part of the collecting container.    Because of these simple pivot points the freedom of movement of the skimmer 41 will not quickly be impeded by adhering pollutants. The skimmer 41 itself can if necessary  be cleaned by additional jet nozzles 37 (not shown).    It is also known to fasten on the skimmer 41 a so-called front float for the purpose of controlling the skimmer in dependence on the thickness of the layer of pollutants.    In view of the fact that, although the installation according to the invention is more particularly designed for dealing with concentrated, tacky pollutants but must nevertheless be utilisable for normal pollutants of low viscosity, floating on the surface, it is advantageous for the front float 44 to be adjustable in height, optionally by remote control, in relation to the skimmer 41. This can be achieved by known means (not shown), for example by hand or with the aid of a hydraulic cylinder or by means of a mechanically operated screw spindle.

In the hopper or separation tanks of the ship a very thick, tacky mass is formed again, the discharge of which may give rise to great difficulties. It is advantageous for known emulsifying additives to be injected into the collecting container and/or into the suction pipe, by way of nozzles which are not shown in the drawings. On flowing through the pump, these are adequately mixed with the pollutants in the water.

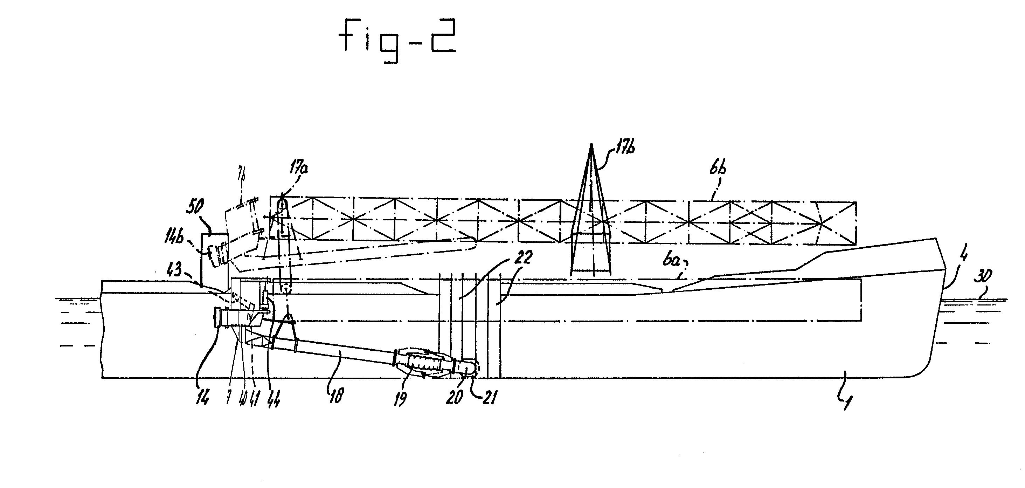

Figure 5A shows the curved guide path comprising a path leading to the centre of the ship and connected to the side wall of the ship's hull, to serve as a track for the running wheels 14 of the collecting container. Figures 1, 2, 5a and 5b show three positions for the sweeping arm 6 and the collecting container 7: first of all, of course, the normal operating position, in which these parts are floating in the water, but with the sweeping arm 6 alongside the hull. In the position 7a, the collecting container 7 is moved upwards with the aid of the derrick 17a, so that it is above the surface of the water but still outboard, so that it can easily be cleaned with the aid of jets of water without excessively soiling the ship, particularly the deck, with the tacky, slippery matter. The sweeping arm 6 can likewise be raised with the aid of the derrick 17b so that it is alongside the ship, but still outboard, above the surface of the water, likewise in the position for cleaning. On completion of the cleaning, both the sweeping arm 6 and the collecting con- tainer 7 can be lifted up to a substantially inboard position - the positions 7b and 6b respectively, so that the ship can easily be moored alongside a quay without damaging the sweeping equipment, while it is also possible to fit the suction pipe for normal operation as a hopper suction dredger. For this pose the suction pipe 18 can be disconnected from the collecting container 7, just at the front of the latter. The sliding member 21, by means of which the suction pipe 18, 19, 20 is fastened to the ship's plating with the aid of the slotted plates 22, can be turned in the slots during the hoisting and fastening of the collecting container, as can be seen in Figure 2.

Finally, it may be observed that the sweeping apparatus described can also be installed on a fish hold ship or the like which is not equipped with its own loading pumps. For this purpose, in addition to the actual sweeping means, pump units - for example equipped with screw pumps - will be temporarily taken on board. A particularly elegant solution consists in installing these pumps in the collecting container, so that a completely self-contained sweeping-pumping unit is obtained, which can be easily and rapidly installed and removed. For the purpose of protecting the pumps, it may be necessary to fit a fine-mesh grid.

CLAIMS

1. Apparatus for removing oil pollutants on water, particularly for concentrated pollutants on the sea, which consists of a vessel having at least one substantially rigid sweeping arm provided with floats and with means for sweeping and guiding the pollutant, and having means, such as lifting cranes, winches and cables, for controlling and guiding the sweeping arm between a sweeping position of maximum extension and a sweeping position of minimum extension and at least one position of rest in which it is hoisted alongside and/or on board, and further having a self-floating collecting container disposed at the end of the sweeping arm near the vessel and provided with a grid, a skimmer and a flexible suction pipe connected between the bottom part of the collecting container and a suction pump, the latter pumping the swept mixture of oil and water to separation tanks in the ship, characterised in that the sweeping means of the sweeping arm (6) consist of a substantially vertical, rigid, smooth screen (32) fastened at the front (referring to the direction of travel) against the sweeping arm and extending to a considerable depth below the mean water level (30), in that the sweeping arm carries over its entire length a pressure water pipe (38) connected to a source of considerable pressure, and in that a number of jet nozzles (36, 37) are disposed in a spaced relationship near the top edge, some distance in front of the sweeping screen (32), and are directed substantially at a slight angle towards the screen (32) and obliquely downwards and obliquely towards the collecting container (7), and further in that in the collecting container (7) at least one jet nozzle is directed onto the grid (40) and at least one jet nozzle is directed, as a jet lance lower in the container, substantially horizontally towards and into the suction connection of the flexible suction pipe (18, 19, 20).

2.  Apparatus according to Claim 1, characterised in that the direction of the jets of the jet nozzles (36, 37) on the sweeping arm (6) is adjustable, and/or in that different nozzles (37) can be fitted, for example for a single concentrated jet or a flat, screen-like jet, and/or that the different nozzles (37) are adapted to be remotely adjusted and operated simultaneously or individually.

3.  Apparatus according to Claim 1 or 2, characterised in that the sweeping arm (6) is divided into two or more parts by at least one articulation (33) whose axis is directed horizontally at right angles to the longitudinal direction of the sweeping arm, so that in its vertical plane the arm can articulate to follow the wave pattern of the surface of the sea and that at this point the pressure water pipe (38) is constructed to be flexible and the sweeping screen is constructed to be continuous and yielding (overlapping or resilient).

4. Apparatus according to one or more of the preceding claims, characterised in that the sweeping arm (6) is fastened by a universal joint (10) to the collecting container (7), so that turning is possible about a vertical axis and about a horizontal axis at right angles to the sweeping arm but that rotation about the longitudinal centre line of the sweeping arm is impossible, and that at the site of the universal joint the sweeping screen (35) is flexible, yielding and continuous from the rigid part on the sweeping arm (6) to the inlet opening of the collectingh container (7).

5. Apparatus according to Claim 4, characterised in that the universal joint (10) is constructed in such a manner as to be rotatable through a small angle $(\alpha, \beta$ ; Figure 5b) and to be fastenable between the collecting container and the sweeping arm, the arrangement being such that the sweeping screen (32) can be adjusted to a position differing by a small angle from the vertical.

6. Apparatus according to one or more of the preceding claims, characterised in that the collecting container (7) is self-buoyant and that it is provided with one or more insulated wheels having a horizontal axis (in tne operating position) and running over the ship's plating for the purpose of preventing metallic contact and wear when the ship rolls and/or when the sweeing arm and collecting container move up and down with the swell, and in that the wheels are preferably provided with pneumatic tyres.

7.   Apparatus according to Claim 6, characterised in that the grid (40) in the collecting container (7) is disposed substantially horizontally.

8.   Apparatus according to Claim 6 or 7, characterised in that the jet nozzles (36, 37) on the grid (40) and the skimmer (41) are individually adjustable, exchangeable and controllable and are directed substantially downwards.

9.   Apparatus according to one or more of the preceding claims, characterised in that the suction pump on board the vessel is a normal "sand" pump of the centrifugal type.

10.   Apparatus according to one or more of the preceding claims, characterised in that the jet nozzles (36, 37) are directed onto the connection of the suction pipe (18) on the collecting container (7) and that optional additional jet nozzles, disposed along the length of the suction pipe and directed in the direction of flow are adapted to be connected to a source of pressurised hot water, for example heated by the exhaust heat of the ship's engines.

11.   Apparatus according to Claim 5, characterised in that above the deck the track (50) for the wheels (14) of the collecting container is extended and is gradually increasingly curved in the midships direction, so that the collecting container (7) and sweeping arm (6), hoisted above the water, can be sprayed clean outboard and can be made fast inboard above the deck.

12. Apparatus according to one or more of the preceding claims, characterised in that the sweeping arm frame (8) is made mainly of pipes in order to be more easily cleaned and to avoid dead corners, and is preferably of triangular section for maximum rigidity with minimum area, and, when made fast inboard, for minimum resistance to waves breaking over the ship.

13. Apparatus according to one or more of Claims 6 to 8, in which the skimmer is provided with a front float, characterised in that the front float (44) is adjustable relative to the skimmer (41), preferably by remote control during operation.

Fig-1

Fig-2

0129279

fig-3

fig-4

Fig-5a

Fig-5b

## European Patent Office

## EUROPEAN SEARCH REPORT

Application number

EP 84 20 0806

### DOCUMENTS CONSIDERED TO BE RELEVANT

| Category | Citation of document with indication, where appropriate, of relevant passages | Relevant to claim | CLASSIFICATION OF THE APPLICATION (Int Cl.³) |
|---|---|---|---|
| A | US-A-3 661 264 (PETERSON)<br>* Column 2, lines 64-75; column 3; figures 1-6 * | 1,2,10 | E 02 B 15/04 |
| A,D | NL-A-7 700 815 (NATIONAL MARINE SERVICE INC.)<br>* Pages 4-10; figures 1,2,8 * | 1,13 | |
| A | NL-A-7 705 258 (BONTJE)<br>* Pages 8,9; figures 2,5 * | 1,4 | |
| A | GB-A-2 065 489 (IHC HOLLAND)<br>* Pages 2,3; figures 1-4 * | 1,6,11 | |
| A | US-A-4 033 869 (McCREW)<br>* Column 4, lines 16-68; column 5; figure 7 * | 1 | TECHNICAL FIELDS SEARCHED (Int. Cl.³)<br><br>E 02 B |

The present search report has been drawn up for all claims

| Place of search | Date of completion of the search | Examiner |
|---|---|---|
| THE HAGUE | 18-09-1984 | HANNAART J.P. |